# FASCICULE DE BREVET EUROPEEN

(11) **EP 1 394 570 B1**
(45) Date de publication et mention de la délivrance du brevet: **03.04.2013**
(21) Numéro de dépôt: 03292051.4
(22) Date de dépôt: 19.08.2003
(51) Int. Cl.: G01V 13/00

(54) **Détecteur de métaux et procédé de test de celui-ci**
Metalldetektor und Verfahren zu seiner Überprüfung
Metal detector and metal detector testing procedure

(30) Priorité: 21.08.2002 IT ar20020029
(43) Date de publication de la demande: 03.03.2004
(73) Titulaire: Manneschi, Alessandro, 52100 Arezzo (IT)
(72) Inventeur: Manneschi, Alessandro, 52100 Arezzo (IT)
(74) Mandataire: Regimbeau

(56) Documents cités:
- EP-A- 0 418 069
- US-A- 2 948 848
- US-A- 4 672 837
- US-A- 4 726 434
- PATENT ABSTRACTS OF JAPAN vol. 1997, no. 07, 31 juillet 1997 (1997-07-31) -& JP 09 072885 A (NISSHIN DENSHI KOGYO KK), 18 mars 1997 (1997-03-18)

## Description

La présente invention concerne le domaine des détecteurs de métaux.

La présente invention s'applique en particulier aux détecteurs de métaux destinés au contrôle d'accès à des milieux sensibles, tels que et sans limitation aucune, les aéroports, banques, ambassades, installations militaires, etc...

On sait que la plupart des systèmes détecteurs de métaux proposés dans ce contexte comprennent des bobinages émetteurs, des bobinages récepteurs et un circuit de traitement électronique adapté pour déceler des variations des signaux reçus sur les bobinages récepteurs, par rapport à une valeur de référence.

Ces détecteurs ont généralement la forme générale d'un portique ou tunnel par lequel transitent les individus, voire les matériels à contrôler.

On trouvera des exemples de réalisation de détecteurs connus dans les documents FR-A-2 720 519, FR-A-2 773 350, FR-A-2 516 251, FR-A-2 610 417, FR-A-2 607 937, FR-A-2 697 919, FR-A-2 698 178 et FR-A-2 698 968, IT 1271382, IT 1216946, IT 1265721, IT 1260208, IT 1249278, IT 1214991 et FN 813502.

Les détecteurs connus ont rendu de grands services.

Cependant ils ne donnent pas toujours satisfaction.

Il s'avère notamment relativement difficile de contrôler le bon fonctionnement de ces détecteurs. En particulier il est généralement délicat de vérifier que les détecteurs présentent une sensibilité adéquate, en raison de la diversité d'objets dangereux, à détecter, apparaissant de nos jours.

En pratique, les responsables des installations sont souvent contraints de pratiquer des tests manuels de détection et de sensibilité en soumettant manuellement des prototypes divers d'objets susceptibles d'être détectés, par exemple des lames de couteaux de géométries et de dimensions diverses, aux détecteurs. Ces opérations sont fastidieuses. Elles requièrent le passage de nombreux prototypes, et ce sous de nombreuses orientations vis à vis des bobinages émetteurs et récepteurs. Ces opérations sont par ailleurs d'une fiabilité discutable, dans la mesure où elles ne répondent généralement pas à un protocole standard établi et elles ne permettent donc pas de garantir que la détection constatée dans la position retenue pour le test manuel serait assurée de la même manière quelle que soit la position de l'objet en question ou encore dans le cas d'un objet similaire mais non rigoureusement identique.

Les problèmes rencontrés avec de nombreux détecteurs connus sont particulièrement importants pour la partie des bobinages situés près du sol. En effet d'une part de nombreux détecteurs connus sont sensibles à l'environnement, par exemple aux masses métalliques de renforcement présentes dans les infrastructures support. Leur calibrage est de ce fait assez délicat. De fait leur réponse varie en fonction de l'environnement et donc de l'implantation des détecteurs. D'autre part certains détecteurs reconnus plus performants sont étudiés pour distinguer les armes métalliques également de petite dimension même si celles-ci sont cachées par exemple à l'intérieur de chaussures dotées de structures de renforts métalliques. Cette prestation peut être cependant assurée seulement avec une calibration opportune du détecteur de métaux en fonction des masses métalliques présentes dans le sol, en dessous du portique de contrôle. Cette calibration manuelle est compliquée car elle exige le passage, dans de multiples orientations et positions, de masses métalliques échantillons, représentant les armes, et une connaissance technique particulièrement détaillée des caractéristiques et des réglages des détecteurs de métaux.

Le document JP 09 072885 divulgue un détecteur de métaux équipé d'un convoyeur pour faire transiter des objets tels que de la nourriture à tester. Le document US 4 726 434 divulgue un détecteur de métal dans un appareil de pesée. Le document EP 0 418 069 divulgue un détecteur de métal équipé d'un convoyeur pour faire transiter des objets tels que de la nourriture. Tous ces documents proposent des moyens de test adaptés à des convoyeurs.

Le document US 4,672,837 divulgue un portique de détection de métaux et une procédure de test. Cependant les moyens décrits dans ce document ne permettent pas un test précis.

La présente invention a pour but de proposer des moyens permettant d'améliorer la situation.

Ce but est atteint dans le cade de la présente invention, grâce à un ensemble formé d'un détecteur de métaux par lequel transitent des individus et d'un objet de référence standard, tel que défini dans le jeu de revendications annexé.

La présente invention concerne également un procédé de test de détecteurs de métaux tel que défini dans le jeu de revendications annexé.

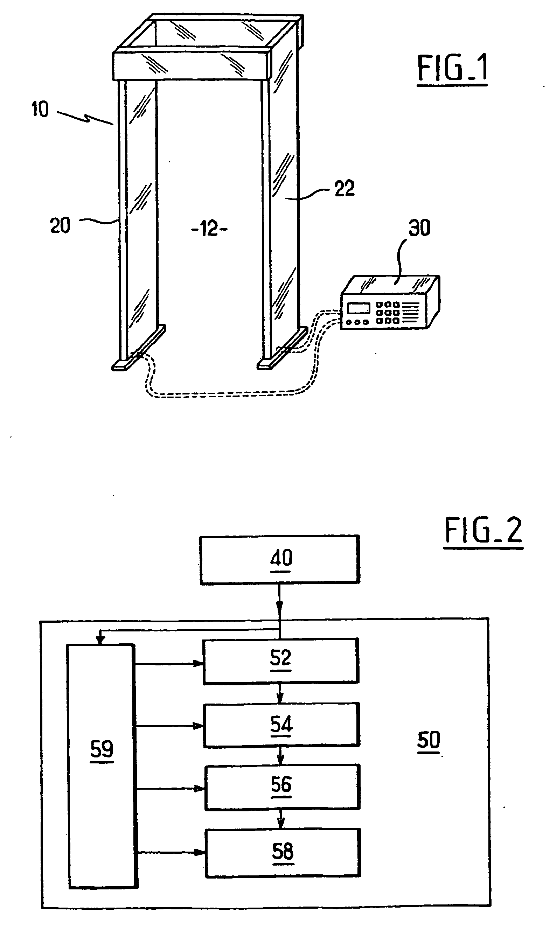

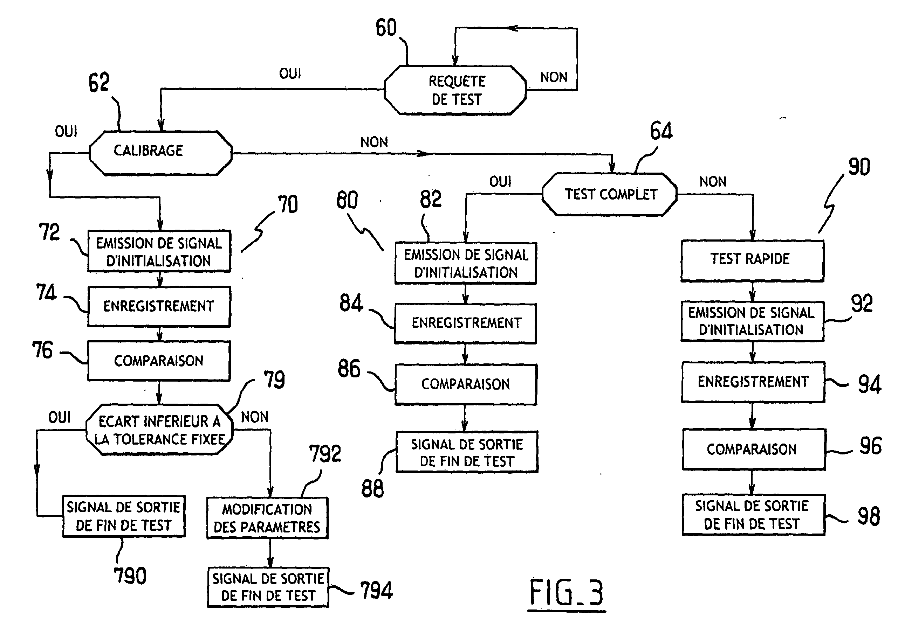

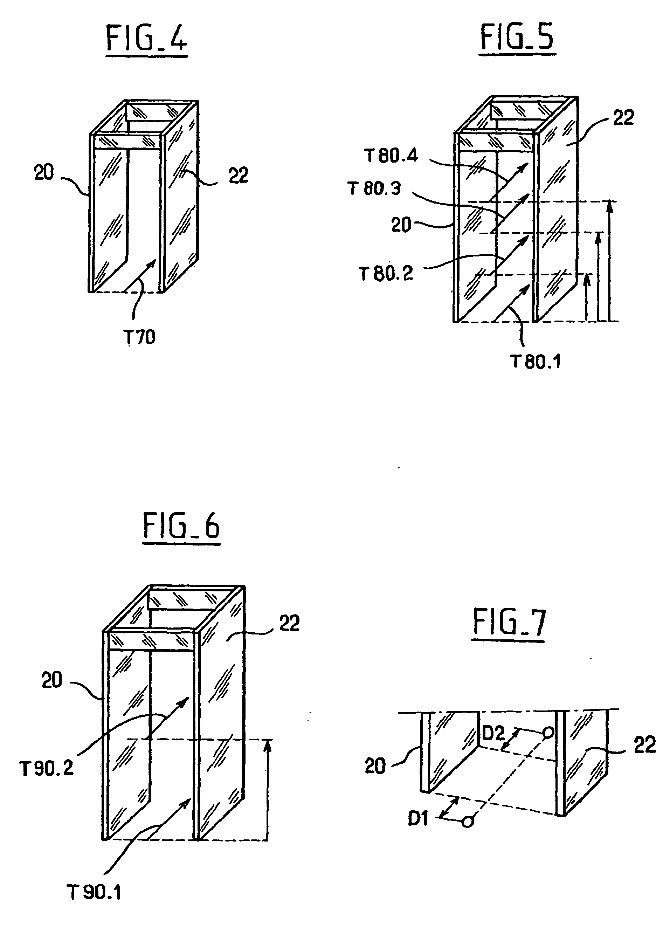

D'autres caractéristiques, buts et avantages de la présente invention, apparaîtront à la lecture de la description détaillée qui va suivre et en regard des dessins annexés, donnés à titre d'exemples non limitatifs et sur lesquels:
. la figure 1 représente une vue générale schématique d'un détecteur de métaux classique, susceptible de trouver application dans le cadre de la présente invention,
. la figure 2 représente une vue schématique des éléments fonctionnels principaux du module de test d'un détecteur de métaux conforme à la présente invention,
. la figure 3 représente un organigramme schématique d'un procédé de test conforme à la présente invention,
. les figures 4 à 6 représentent schématiquement les passages de l'objet de référence standard dans le cadre de trois variantes conformes à la présente invention, et
. la figure 7 représente schématiquement l'amplitude du passage dudit objet de référence standard selon une mise en oeuvre préférentielle de la présente invention.

On aperçoit sur la figure 1 annexée un portique 10 formé essentiellement de deux panneaux verticaux 20, 22 qui logent les bobinages émetteurs et les bobinages récepteurs, selon toutes configurations connues de l'homme de l'art. Il est ainsi défini entre les panneaux 20, 22, un canal 12 que les individus à contrôler sont invités à traverser.

Le dispositif comprend en outre un ensemble de traitement 30 conçu d'une part pour appliquer les signaux d'alimentation adéquats aux bobinages émetteurs et d'autre part pour traiter les signaux issus des bobinages récepteurs.

Tous ces moyens, panneaux, bobinages émetteurs et bobinages récepteurs, moyens d'alimentation et de traitement, sont connus de l'homme de l'art, ils ne seront donc pas décrits plus en détail par la suite. En particulier la présente invention ne doit aucunement être considérée comme limitée quant au nombre ou à la configuration des bobinages, ni quant aux modalités d'alimentation des bobinages et de traitement des signaux issus de ceux-ci.

On a représenté schématiquement sur la figure 2, les blocs fonctionnels principaux des moyens composant les éléments de test d'un détecteur conforme à la présente invention. Ces moyens sont de préférence logés essentiellement dans le boîtier des moyens de traitement 30.

On aperçoit sur cette figure 2 des moyens de sélection 40 aptes à détecter une requête de test, et des moyens de contrôle 50.

Les moyens de sélection 40, destinés à détecter la demande de test provenant d'un utilisateur, peuvent faire l'objet de nombreuses variantes de réalisation.

Il peut s'agir d'un bouton à accès protégé, d'un lecteur de carte, d'un détecteur de code saisi sur un clavier, ou de tout autre moyen équivalent.

Les moyens de sélection 40 ont pour fonction d'activer les moyens de contrôle 50, lors d'une détection de requête de test.

En pratique cette activation se concrétise de préférence par le chargement et la mise en oeuvre d'un programme spécifique à la requête détectée.

Dans le cadre de la présente invention, il est de préférence proposé plusieurs types de test, et les moyens de sélection 40 chargent en conséquence un programme choisi parmi plusieurs programmes disponibles, en fonction de la nature de la requête détectée.

Il est ainsi proposé de préférence trois programmes : 1) un processus de test et de recalibrage automatique de paramètres de détection si nécessaire, 2) un processus de test complet et 3) un processus de test simple et rapide, comme on le verra plus en détail par la suite.

De préférence les moyens de contrôle 50 comprennent un module d'affichage 52, un module d'enregistrement 54, un module de comparaison 56, un module de sortie 58 et une unité centrale 59 qui pilote l'ensemble.

Le module d'affichage 52 est adapté pour délivrer des signaux guidant l'opérateur dans le séquencement du programme de test, par exemple fournissant des signaux invitant à procéder au passage de l'objet de référence standard, à interrompre ce passage, à réitérer celui-ci à une hauteur différente, etc ...

Il s'agit de préférence d'un module qui délivre des signaux visuels. Cependant en variante, un tel module d'affichage de signaux visuels, pourrait être compléter ou remplacer par des moyens fournissant des signaux sonores.

A titre d'exemple non limitatif, les signaux visuels peuvent prendre la forme suivante, ou toute variante équivalente : « WAIT » (pour demander à l'opérateur de préparer la sphère mais d'attendre) puis « PASS 1» (pour inviter l'opérateur à passer la sphère), (éventuellement suivi de « WAIT » - « PASS 2 »... « WAIT » - « PASS n » etc... dans le cas de passages multiples requis), « OK » (pour signaler un test concluant positivement), « FAIL » (pour signaler un résultat de test négatif), éventuellement « NOISE » (lorsque le dispositif a décelé un échec du test du à la présence d'une source de bruit parasite environnante, pour inviter l'opérateur à identifier, localiser et supprimer cette source parasite).

Le cas échéant les signaux visuels peuvent indiquer la hauteur à laquelle l'objet de référence standard doit être déplacé. Eventuellement lorsque le détecteur comporte des moyens d'affichage répartis sur la hauteur du détecteur (par exemple pour identifier la hauteur à laquelle un objet métallique indésirable à été décelé, dans un fonctionnement normal du détecteur), ces moyens peuvent être utilisés pour visualiser la hauteur à laquelle l'opérateur est invité à déplacer ledit objet de référence standard.

Le module d'enregistrement 54 a pour fonction d'enregistrer les signaux issus des bobinages récepteurs au cours des différents passages successifs de l'objet de référence standard.

Le module de comparaison 56 a pour fonction de comparer les signaux ainsi enregistrés avec une réponse attendue prédéterminée.

Les moyens de sortie 58 ont pour fonction de fournir un signal de sortie représentatif du résultat du test. Ils peuvent ainsi fournir un signal positif lorsque le test a été conduit à son terme sans détecter d'anomalies. Il peut délivrer un signal négatif si au contraire le test a décelé un défaut. Il peut s'agir par exemple de la détection d'une source de bruit environnante qui perturbe la mesure et qu'il convient d'arrêter avant toute utilisation du détecteur.

La encore les moyens de sortie 58 peuvent fournir le signal de sortie par toute voie appropriée, par exemple visuelle ou sonore, voire une impression de compte rendu de test.

Dans le cadre des requêtes de calibrage, les moyens de sortie 58 sont en outre adaptés pour modifier les paramètres de détection si les signaux détectés en provenance des bobinages récepteurs ne tombent pas dans une plage de tolérance attendue de la réponse prédéterminée. Plus précisément les moyens de sortie 58 peuvent dans ce cas intervenir sur les paramètres d'alimentation des bobinages émetteurs (amplitude, fréquence, phase ...), ou sur les paramètres de détection des signaux issus des bobinages récepteurs, par exemple le gain appliqué à ces signaux.

De préférence le portique de détection comporte plusieurs canaux, constitués par des bobinages différents et des signaux différents pour chaque bobinage, par exemple des signaux déphasés. Dans le cadre de la présente invention, le module de test est adapté pour procéder aux opérations de contrôle, voire de calibrage lorsque celui-ci est requis, pour chacun des canaux.

Dans le cadre de la présente invention, l'objet de référence standard est formé de préférence d'une sphère métallique. Celle-ci possède typiquement un diamètre de 44,45 mm.

L'utilisation d'une sphère en tant qu'objet de référence standard offre de nombreux avantages.

Tout d'abord une sphère est facile à manipuler.

Ensuite et surtout elle présente une réponse nécessairement homogène dans l'espace, sans qu'il soit nécessaire de contrôler son orientation dans l'espace, et par conséquent elle ne risque pas de provoquer une erreur résultant d'un défaut de positionnement.

Enfin et surtout le Déposant a constaté après de nombreuses recherches et essais, qu'une sphère permet, une fois connue la cartographie complète de sensibilité à l'intérieur du portique, de contrôler complètement la sensibilité d'un détecteur, par simple passage dans un plan médian, sans qu'il soit nécessaire de procéder à de très nombreux passages selon des trajectoires multiples (par exemple plus ou moins près des bobinages), ou encore selon des trajectoires diverses, comme cela est le cas actuellement.

On va maintenant décrire l'organigramme illustré sur la figure 3.

Celui-ci débute par une étape de détection de requête de test 60.

Lors d'une telle détection, les moyens de sélection 40 lancent le programme de test qui correspond à la nature de la requête détectée.

Pour cela les moyens de sélection examinent à l'étape 62, si le processus demandé est celui d'un calibrage.

Dans l'affirmative, le processus de test avec calibrage 70 est lancé.

Au contraire dans la négative, les moyens de sélection examinent à l'étape 64 si le processus de test demandé est un test complet ou un test rapide.

Si un test complet est demandé, les moyens de sélection 40 lancent le programme adéquat 80. Ils lancent le processus de test rapide 90 si celui-ci est demandé.

Chacun de ces trois processus comprend successivement des étapes d'émission de signal d'initialisation 72, 82, 92 invitant l'utilisateur à initialiser un déplacement d'objet standard de référence (par exemple « WAIT » puis « PASS »), puis des étapes d'enregistrement 74, 84 et 94 des signaux issus des bobinages récepteurs lors de ces déplacements, et des étapes de comparaison 76, 86 et 96 consistant à comparer les signaux enregistrés avec des modèles attendus prédéterminés.

Dans le cas des processus de test complet 80 et rapide 90, les étapes de comparaison 86 et 96 sont suivies d'une étape 88, 98 de délivrance d'un signal de sortie représentatif de l'état du dispositif détecté.

Dans le cas du processus de calibrage 70, les moyens de sortie 58 sont adaptés pour examiner à l'étape 79 si l'écart détecté entre les signaux réels issus des bobinages récepteurs et les signaux prédéterminés servant de référence de comparaison, tombent dans une fourchette de tolérance fixée.

Dans l'affirmative, le test est positif et le processus est prolongé par l'étape de fourniture d'un signal de sortie de fin de test à l'étape 790.

Dans la négative au contraire, les moyens de sortie 58 procèdent à une modification des paramètres de détection pour chacun des canaux, à l'étape 792, comme on l'a indiqué précédemment.

Cette correction peut être faite par exemple en exploitant des tables de référence et de correction prémémorisées, établies sur la base de la réponse standard attendue, respectivement pour chacun des canaux, lors du passage d'une sphère.

L'étape 792 est suivie d'une étape de visualisation de fin de test 794.

Bien entendu chacun des trois processus de test 70, 80 et 90 peut faire l'objet de nombreuses variantes de réalisation.

De préférence le test de calibrage 70 comporte un passage unique de l'objet de référence, au niveau du sol, comme on l'a illustré sur la figure 4 sous la référence T70 ; Le test complet 80 quant à lui consiste de préférence à procéder à quatre passages successifs de l'objet de référence, à des hauteurs différentes, par exemple et non limitativement au niveau du sol, à une hauteur H80.2 de 66 cm, à une hauteur H80.3 de 104 cm et à une hauteur H80.4 de 142 cm ; sur la figure 5 ces passages sont schématisés en T80.1, T80.2, T80.3 et T80.4 ; quant au test simple 90, il consiste de préférence à procéder à deux passages successifs, l'un au niveau du sol référencé T90.1 sur la figure 6 et l'autre sensiblement à mi-hauteur du portique référencé T90.2 sur la même figure 6, par exemple à une hauteur H90.2 de 104 cm.

A titre d'exemple non limitatif, le processus de test et calibrage peut être préconisé à la fin de chaque installation d'un détecteur, à chaque remplacement d'un composant d'un détecteur, ou lors de chaque changement de positionnement ou d'implantation d'un détecteur, voire de chaque changement notable de l'environnement.

Le processus de test complet peut être préconisé dans les mêmes conditions que le processus de test et de calibrage. Il peut en outre être préconisé périodiquement pour raisons de sécurité.

Il en est de même pour le processus de test rapide.

La trajectoire demandée à l'objet de référence standard est de préférence une trajectoire rectiligne, à mi largeur entre les deux panneaux 20, 22 des portiques, et à hauteur constante pour chaque passage respectif, c'est à dire horizontale.

On notera que de préférence chaque trajectoire doit être initiée à une distance D1 en amont de l'espace défini par les panneaux 20, 22 du détecteur, par exemple à une distance D1 de l'ordre de 10 cm en amont de cet espace, et de même se terminer, tout en respectant la rectilinéarité précitée, à une distance D2 en aval de cet espace, par exemple à une distance D2 aval de l'ordre de 10 cm.

La présente invention permet un test simple, par toute personne autorisée, sans formation complexe particulière. Elle permet également un test fiable. La présente invention permet notamment un test et un calibrage des canaux ou bobinages actifs à proximité du sol.

La présente invention permet ainsi d'uniformiser la réponse de détection du détecteur de métaux à la variation des conditions d'installation du détecteur de métaux.

La présente invention permet ainsi de disposer de détecteurs de métaux à portique fiables, sensibles et uniformes.

En particulier la présente invention n'est pas limitée aux nombres ni aux hauteurs de passages de l'objet de référence standard, précédemment mentionnés. En pratique ces nombres et hauteurs de passages seront adaptés par l'homme de l'art pour stimuler tous les canaux des détecteurs testés, selon la configuration particulière de ceux-ci.

La présente invention n'est pas non plus limitée à l'utilisation de détecteurs du type portique illustré sur la figure 1. Elle s'applique à toutes configurations de détecteurs, y compris par exemple aux détecteurs de type colonne, c'est à dire aux détecteurs dans lesquels l'ensemble des bobinages, qu'ils soient émetteurs ou récepteurs sont regroupés sur un support central commun, par exemple de type colonne cylindrique vertical.

## Revendications

1. Ensemble formé d'un portique de détection de métaux par lequel transitent des individus et d'un objet de référence standard, ledit portique comprenant des bobinages émetteurs, des bobinages récepteurs et un circuit de traitement électronique (30) adapté pour déceler des variations des signaux reçus sur les bobinages récepteurs, par rapport à une valeur de référence, **caractérisé par le fait qu'**il comprend en outre un module de test qui comporte des moyens de sélection (40) aptes à détecter une requête de test, et des moyens de contrôle (50), mis en oeuvre lors d'une détection de requête de test par les moyens de sélection (40), aptes à comparer les signaux issus des bobinages récepteurs, lors du passage subséquent dudit objet de référence standard qui est une sphère métallique, dans le détecteur, avec une réponse prédéterminée, et aptes à fournir un signal de sortie représentatif du résultat du test.

2. Ensemble de détection de métaux selon la revendication 1, **caractérisé par le fait que** le portique de détection comporte plusieurs canaux, constitués par des bobinages différents et des signaux différents pour chaque bobinage, et que le module de test est adapté pour procéder aux opérations de contrôle pour chacun des canaux du détecteur.

3. Ensemble de détection de métaux selon l'une des revendications 1 ou 2, **caractérisé par le fait que** les moyens de sélection (40) sont choisis dans le groupe comprenant : un bouton à accès protégé, un lecteur de carte, un détecteur de code saisi sur un clavier.

4. Ensemble de détection de métaux selon l'une des revendications 1 à 3, **caractérisé par le fait que** les moyens de sélection (40) sont adaptés pour charger et mettre en oeuvre un programme de contrôle spécifique à la requête détectée.

5. Ensemble de détection de métaux selon l'une des revendications 1 à 4, **caractérisé par le fait que** les moyens de sélection (40) sont adaptés pour charger et mettre en oeuvre un programme de contrôle spécifique à la requête détectée, choisi parmi plusieurs programmes de contrôle disponibles.

6. Ensemble de détection de métaux selon l'une des revendications 1 à 5 **caractérisé par le fait que** les moyens de sélection (40) sont adaptés pour charger et mettre en oeuvre un programme de contrôle spécifique à la requête détectée, choisi parmi 3 programmes de contrôle disponibles : 1) un processus de test et de recalibrage automatique de paramètres de détection si nécessaire, 2) un processus de test complet et 3) un processus de test simple et rapide.

7. Ensemble de détection de métaux selon l'une des revendications 1 à 6, **caractérisé par le fait que** les moyens de contrôle (50) comprennent un module d'affichage (52), un module d'enregistrement (54), un module de comparaison (56), un module de sortie (58) et une unité centrale (59) qui pilote l'ensemble.

8. Ensemble de détection de métaux selon la revendication 7, **caractérisé par le fait que** le module d'affichage (52) est adapté pour délivrer des signaux guidant l'opérateur dans le séquencement du programme de test.

9. Ensemble de détection de métaux selon l'une des revendications 7 ou 8, **caractérisé par le fait que** le module d'affichage (52) est adapté pour fournir des signaux invitant à procéder au.passage de l'objet de référence standard, à interrompre ce passage, et éventuellement à réitérer celui-ci à une hauteur différente.

10. Ensemble de détection de métaux selon l'une des revendications 7 à 9, **caractérisé par le fait que** le module d'affichage (52) est adapté pour fournir des signaux indiquant la hauteur à laquelle l'objet de référence standard doit être déplacé.

11. Ensemble de détection de métaux selon l'une des revendications 7 à 10, **caractérisé par le fait que** les moyens de sortie (58) fournissent un signal de sortie représentatif du résultat du test.

12. Ensemble de détection de métaux selon l'une des revendications 7 à 11, **caractérisé par le fait que** les moyens de sortie (58) sont adaptés pour modifier les paramètres de détection si les signaux détectés en provenance des bobinages récepteurs ne tombent pas dans une plage de tolérance attendue de la réponse prédéterminée, dans le cadre d'une requête de calibrage.

13. Ensemble de détection de métaux selon la revendication 12, **caractérisé par le fait qu'**il comporte plusieurs canaux, constitués par des bobinages différents et des signaux différents pour chaque bobinage, et que le module de test est adapté pour procéder aux opérations de calibrage pour chacun des canaux du détecteur.

14. Procédé de test de portique de détection de métaux par lequel transitent des individus **caractérisé par le fait que** le procédé comprend, après une étape (60) d'émission de requête de test, les étapes qui consistent à passer un objet de référence standard connu, qui est une sphère métallique dans le détecteur (72, 82, 92),à comparer (76, 86, 96) les signaux issus des bobinages récepteurs, lors de ce passage, avec une réponse prédéterminée, et à fournir un signal de sortie représentatif du résultat du test.

15. Procédé selon la revendication 14, **caractérisé par le fait que** l'étape d'émission d'une requête de test (60) comprend la sélection parmi plusieurs programmes disponibles.

16. Procédé selon l'une des revendications 14 et 15, **caractérisé par le fait que** l'étape d'émission d'une requête de test (60) comprend la sélection parmi trois programmes disponibles : 1) un processus de test et de recalibrage automatique de paramètres de détection si nécessaire, 2) un processus de test complet et 3) un processus de test simple et rapide.

17. Procédé selon l'une des revendications 14 à 16, **caractérisé par le fait qu'**il comprend la délivrance de signaux (72, 82, 92) guidant l'opérateur dans le séquencement du programme de test.

18. Procédé selon l'une des revendications 14 à 17, **caractérisé par le fait qu'**il comprend la délivrance de signaux (72, 82, 92) indiquant la hauteur à laquelle l'objet de référence standard doit être déplacé.

19. Procédé selon l'une des revendications 14 à 18, **caractérisé par le fait qu'**il comprend une étape (792) consistant à modifier les paramètres de détection si les signaux détectés en provenance des bobinages récepteurs ne tombent pas dans une plage de tolérance attendue de la réponse prédéterminée.

20. Procédé selon la revendication 19, **caractérisé par le fait que** l'étape de modification (792) consiste à modifier le gain des signaux issus des bobinages récepteurs.

21. Procédé selon l'une des revendications 14 à 20, **caractérisé par le fait qu'**il comprend un processus de calibrage (70) qui comporte un passage unique de l'objet de référence, au niveau du sol.

22. Procédé selon l'une des revendications 14 à 21, **caractérisé par le fait qu'**il comprend un processus de test (80, 90) qui consiste à procéder à plusieurs passages successifs de l'objet de référence, à des hauteurs différentes.

23. Procédé selon la revendication 22, **caractérisé par le fait qu'**un processus de test (80) comporte quatre passages successifs de l'objet de référence, à des hauteurs différentes.

24. Procédé selon l'une des revendications 22 ou 23 **caractérisé par le fait qu'**un processus de test (90) comporte deux passages successifs de l'objet de référence, à des hauteurs différentes.

25. Procédé selon l'une des revendications 14 à 24, **caractérisé par** le fait la trajectoire de l'objet de référence standard est une trajectoire (T) rectiligne et à hauteur constante pour chaque passage respectif.

26. Procédé selon l'une des revendications 14 à 24, **caractérisé par le fait que** la trajectoire de l'objet de référence standard est effectuée à mi largeur entre deux panneaux (20, 22) composant le détecteur.

## Claims

1. An set composed of a metal detector portal through which individuals pass and a standard reference object, said portal including transmitting coils, receiving coils and an electronic processing circuit (30) adapted to detect variations in signals received by the receiving coils compared to a reference value, **characterized by** the fact that it also includes a test module that comprises selection means (40) capable of detecting a test request, and checking means (50), employed upon detection of a test request by the selection means (40), capable of comparing the signals emanating from the receiving coils during the subsequent passing of the standard test object, which is a metal sphere, in the detector, with a predetermined response, and capable of supplying an output signal representing the test result.

2. The metal detector set according to Claim 1, **characterized by** the fact that the detector portal comprises several channels consisting of different coils and different signals for each coil, and that the test module is adapted to perform the checking operations for each channel of the detector.

3. The metal detector set according to one of Claims 1 or 2, **characterized by** the fact that the selection means (40) are selected from a group comprising: a button with protected access, a card reader, a code detector with keyboard entry.

4. The metal detector set according to one of Claims 1 through 3, **characterized by** the fact that the selection means (40) are adapted to load and execute a checking program specific to the detected request.

5. The metal detector set according to one of Claims 1 through 4, **characterized by** the fact that the selection means (40) are adapted to load and execute a checking program specific to the detected request, selected from among several available checking programs.

6. The metal detector set according to one of Claims 1 through 5, **characterized by** the fact that the detection means (40) are adapted to load and execute a checking program specific to the detected request, selected from among 3 available checking programs: 1) a test and, if necessary, automatic detection parameter recalibration process, 2) a complete test process and 3) a simple and rapid test process.

7. The metal detector set according to one of Claims 1 through 6, **characterized by** the fact that the checking means (50) include a display module (52), a recording module (54), a comparison module (56), an output module (58) and a central unit (59) which controls the set.

8. The metal detector set according to Claim 7, **characterized by** the fact that the display module (52) is adapted for delivering signals guiding the operator in the sequencing of the test program.

9. The metal detector set according to one of Claims 7 or 8, **characterized by** the fact that the display module (52) is adapted for supplying signals inviting to proceed with passing of the standard reference object, to interrupt said passing and if necessary to repeat it at a different height.

10. The metal detector set according to one of Claims 7 through 9, **characterized by** the fact that the display module (52) is adapted to supply signals indicating the height at which the standard reference object must be moved.

11. The metal detector set according to one of Claims 7 through 10, **characterized by** the fact that the output means (58) supply an output signal representing the test result.

12. The metal detector set according to one of Claims 7 through 11, **characterized by** the fact that the output means (58) are adapted for modifying the detection parameters if the detected signals emanating from the receiving coils do not fall within an expected tolerance range of the predetermined response, within the context of a calibration request.

13. The metal detector set according to Claim 12, **characterized by** the fact that it comprises several channels, consisting of different coils and different signals for each coil, and that the test module is adapted to perform calibration operations for each channel of the detector.

14. A test method for a metal detector portal through which individuals pass, **characterized by** the fact that the method includes, after a step (60) consisting of issuing a test request, the steps consisting of passing a known standard reference object, which is a metal sphere, in the detector (72, 82, 92), to be compared (76, 86, 96) to signals emanating from receiving coils during said passing, with a predetermined response, a supplying an output signal representing the test result.

15. The method according to Claim 14, **characterized by** the fact that the step consisting of issuing a test request (60) includes selection from among many available programs.

16. The method according to one of Claims 14 and 15, **characterized by** the fact that the step consisting of issuing a test request (60) includes selection from among three available programs: 1) a test, and if necessary a detection parameter recalibration process, 2) a complete test process and 3) a simple and quick test process.

17. The method according to one of Claims 14 through 16, **characterized by** the fact that it includes the supplying of signals (72, 82, 92) guiding the operator in sequencing the test program.

18. The method according to one of Claims 14 through 17, **characterized by** the fact that it includes the supplying of signals (72, 82, 92) indicating the height at which the standard reference object must be moved.

19. The method according to one of Claims 14 through 18, **characterized by** the fact that it includes a step (792) consisting of modifying the detection parameters if the detected signals emanating from the receiving coils do not fall within an expected tolerance range of the predetermined response.

20. The method according to Claim 19, **characterized by** the fact that the modification step (792) consists of modifying the gain of the signals emanating from the receiving coils.

21. The method according to one of Claims 14 through 20, **characterized by** the fact that it includes a calibration process (70) which comprises a single passing of the reference object, at ground level.

22. The method according to one of Claims 14 through 21, **characterized by** the fact that it includes a test method (80, 90) consisting of consecutively passing the reference object several times at different heights.

23. The method according to Claim 22, **characterized by** the fact that a test method (80) comprises four consecutive passings of the reference object at different heights.

24. The method according to one of Claims 22 or 23, **characterized by** the fact that a test method (90) comprises two consecutive passages of the reference object at different heights.

25. The method according to one of Claims 14 through 24, **characterized by** the fact that the trajectory of the standard reference object is a rectilinear (T) trajectory at a constant height for each respective passing.

26. The method according to one of Claims 14 through 24, **characterized by** the fact that the trajectory of the standard reference object is performed halfway between the two panels (20, 22) constituting the detector.

## Patentansprüche

1. Anordnung, die aus einem Metalldetektionsrahmen, den Individuen durchqueren, und einem Standardreferenzobjekt gebildet ist, wobei der Rahmen Sendespulen, Empfängerspulen und eine elektronische Verarbeitungsschaltung (30) umfasst, die ausgestaltet ist, Variationen von Signalen, die über die Empfängerspulen empfangen worden sind, bezüglich eines Referenzwerts nachzuweisen, **dadurch gekennzeichnet, dass** sie außerdem ein Testmodul umfasst, das Auswahlmittel (40) umfasst, die ausgestaltet sind, ein Testersuchen zu erfassen, und Steuerungsmittel (50), die bei einer Erfassung eines Testersuchens durch die Auswahlmittel (40) eingesetzt werden, die ausgestaltet sind, die Signale von den Empfängerspulen bei dem nachfolgenden Durchgang des Standardreferenzobjekts zu vergleichen, das eine metallische Kugel ist, in dem Detektor, mit einer vorbestimmten Reaktion, und ausgestaltet sind, ein repräsentatives Ausgangssignal des Testergebnisses zu liefern.

2. Metalldetektionsanordnung nach Anspruch 1, **dadurch gekennzeichnet, dass** der Detektorrahmen mehrere Kanäle umfasst, die durch verschiedene Spulen und verschiedene Signale für jede Spule gebildet werden, und dass das Testmodul ausgestaltet ist, Steuerungsfunktionen für jeden der Kanäle des Detektors durchzuführen.

3. Metalldetektionsanordnung nach einem der Ansprüche 1 oder 2, **dadurch gekennzeichnet, dass** die Auswahlmittel (40) aus der Gruppe gewählt sind, die umfasst: einen Knopf mit geschütztem Zugriff, einen Kartenleser, einen Detektor für einen Code, der von einer Tastatur abgegriffen wird.

4. Metalldetektionsanordnung nach einem der Ansprüche 1 bis 3, **dadurch gekennzeichnet, dass** die Auswahlmittel (40) ausgestaltet sind, ein bestimmtes Steuerungsprogramm zum erfassten Ersuchen zu laden und einzusetzen.

5. Metalldetektionsanordnung nach einem der Ansprüche 1 bis 4, **dadurch gekennzeichnet, dass** die Auswahlmittel (40) ausgestaltet sind, ein bestimmtes Steuerprogramm zum erfassten Ersuchen zu laden und einzusetzen, das unter mehreren verfügbaren Steuerungsprogrammen gewählt ist.

6. Metalldetektionsanordnung nach einem der Ansprüche 1 bis 5, **dadurch gekennzeichnet, dass** die Auswahlmittel (40) ausgestaltet sind, ein bestimmtes Steuerungsprogramm zum erfassten Ersuchen zu laden und einzusetzen, das unter drei verfügbaren Steuerungsprogrammen gewählt ist: 1) ein automatisches Test- und Neukalibrierverfahren von Detektionsparametern wenn notwendig, 2) ein vollständiges Testverfahren und 3) ein einfaches und schnelles Testverfahren.

7. Metalldetektionsanordnung nach einem der Ansprüche 1 bis 6, **dadurch gekennzeichnet, dass** die Steuerungsmittel (50) ein Anzeigemodul (52), ein Erfassungsmodul (54), ein Vergleichsmodul (56), ein Ausgangsmodul (58) und eine Zentraleinheit (59) umfassen, die die Anordnung steuert.

8. Metalldetektionsanordnung nach Anspruch 7, **dadurch gekennzeichnet, dass** das Anzeigemodul (52) ausgestaltet ist, Signale zu liefern, die den Anwender in der Folge des Testprogramms führen.

9. Metalldetektionsanordnung nach einem der Ansprüche 7 oder 8, **dadurch gekennzeichnet, dass** das Anzeigemodul (52) ausgestaltet ist, Signale zu liefern, die zum Durchführen des Durchgangs des Standardreferenzobjekts, zum Unterbrechen dieses Durchgangs und gegebenenfalls zum Wiederholen desselben bei einer anderen Höhe auffordern.

10. Metalldetektionsanordnung nach einem der Ansprüche 7 bis 9, **dadurch gekennzeichnet, dass** das Anzeigemodul (52) ausgestaltet ist, Signale zu liefern, die die Höhe angeben, in der das Standardreferenzobjekt bewegt werden soll.

11. Metalldetektionsanordnung nach einem der Ansprüche 7 bis 10, **dadurch gekennzeichnet, dass** die Ausgangsmittel (58) ein Ausgangssignal liefern, das repräsentativ für das Testergebnis ist.

12. Metalldetektionsanordnung nach einem der Ansprüche 7 bis 11, **dadurch gekennzeichnet, dass** die Ausgangsmittel (58) ausgestaltet sind, die Erfassungsparameter zu verändern, wenn die erfassten Signale von den Empfängerspulen nicht in einen Toleranzbereich fallen, der von der vorbestimmten Reaktion erwartet wird, im Rahmen eines Kalibrierersuchens.

13. Metalldetektionsanordnung nach Anspruch 12, **dadurch gekennzeichnet, dass** sie mehrere Kanäle umfasst, die durch verschiedene Spulen und verschiedene Signale für jede Spule gebildet werden, und dass das Testmodul ausgestaltet ist, Kalibrierfunktionen für jeden der Kanäle des Detektors durchzuführen.

14. Testverfahren eines Metalldetektionsrahmens, den Individuen durchqueren, **dadurch gekennzeichnet, dass** das Verfahren umfasst, nach einer Phase (60) eines Aussendens eines Testersuchens, die Phasen, die aus Passieren eines bekannten Standardreferenzobjekts, das eine metallische Kugel ist, in dem Detektor (72, 82, 92), Vergleichen (76, 86, 96) der Signale von den Empfängerspulen bei dem Durchgang mit einer vorbestimmten Reaktion und Liefern eines Ausgangssignals, das repräsentativ für das Testergebnis ist, bestehen.

15. Verfahren nach Anspruch 14, **dadurch gekennzeichnet, dass** die Sendephase eines Testersuchens (60) die Auswahl unter mehreren verfügbaren Programmen umfasst.

16. Verfahren nach einem der Ansprüche 14 oder 15, **dadurch gekennzeichnet, dass** die Sendephase eines Testersuchens (60) die Auswahl unter drei verfügbaren Programmen umfasst: 1) ein automatisches Test- und Neukalibrierverfahren von Detektionsparametern wenn notwendig, 2) ein vollständiges Testverfahren und 3) ein einfaches und schnelles Testverfahren.

17. Verfahren nach einem der Ansprüche 14 bis 16, **dadurch gekennzeichnet, dass** es das Liefern von Signalen (72, 82, 92) umfasst, die den Anwender in der Folge des Testprogramms führen.

18. Verfahren nach einem der Ansprüche 14 bis 17, **dadurch gekennzeichnet, dass** es das Liefern von Signalen (72, 82, 92) umfasst, die die Höhe anzeigen, in der das Standardreferenzobjekt bewegt werden soll.

19. Verfahren nach einem der Ansprüche 14 bis 18, **dadurch gekennzeichnet, dass** es eine Phase (792) umfasst, die aus Verändern der Detektionsparameter besteht, wenn die erfassten Signale von den Empfängerspulen nicht in einen Toleranzbereich fallen, der von der vorbestimmten Reaktion erwartet wird.

20. Verfahren nach Anspruch 19, **dadurch gekennzeichnet, dass** die Veränderungsphase (792) aus Verändern der Verstärkung von Signalen von den Empfängerspulen besteht.

21. Verfahren nach einem der Ansprüche 14 bis 20, **dadurch gekennzeichnet, dass** es ein Kalibrierverfahren (70) umfasst, das einen einzelnen Durchgang des Referenzobjekts in Höhe des Bodens umfasst.

22. Verfahren nach einem der Ansprüche 14 bis 21, **dadurch gekennzeichnet, dass** es ein Testverfahren (80, 90) umfasst, das aus Durchführen von mehreren aufeinanderfolgenden Durchgängen des Referenzobjekts in verschiedenen Höhen besteht.

23. Verfahren nach Anspruch 22, **dadurch gekennzeichnet, dass** ein Testverfahren (80) vier aufeinanderfolgende Durchgänge des Referenzobjekts in verschiedenen Höhen umfasst.

24. Verfahren nach einem der Ansprüche 22 oder 23, **dadurch gekennzeichnet, dass** ein Testverfahren (90) zwei aufeinanderfolgende Durchgänge des Referenzobjekts in verschiedenen Höhen umfasst.

25. Verfahren nach einem der Ansprüche 14 bis 24, **dadurch gekennzeichnet, dass** die Trajektorie des Standardreferenzobjekts eine geradlinige Trajektorie (T) ist und in konstanter Höhe für jeden jeweiligen Durchgang ist.

26. Verfahren nach einem der Ansprüche 14 bis 24, **dadurch gekennzeichnet, dass** die Trajektorie des Standardreferenzobjekts auf halber Breite zwischen zwei Platten (20, 22), die den Detektor bilden, durchgeführt wird.
